(19) Europäisches Patentamt
European Patent Office
Office européen des brevets

(11) **EP 1 478 953 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **03742572.5**

(22) Anmeldetag: **21.02.2003**

(51) Int Cl.:
*G02B 5/08* *(2006.01)* *G21K 1/06* *(2006.01)*

(86) Internationale Anmeldenummer:
**PCT/EP2003/001842**

(87) Internationale Veröffentlichungsnummer:
**WO 2003/071317 (28.08.2003 Gazette 2003/35)**

(54) **MONOCHROMATORSPIEGEL FÜR DEN EUV-SPEKTRALBEREICH**

MONOCHROMATOR MIRROR FOR THE EUV-SPECTRAL RANGE

MIROIR MONOCHROMATEUR POUR LE DOMAINE SPECTRAL DE L'ULTRAVIOLET EXTREME

(84) Benannte Vertragsstaaten:
**AT BE BG CH CY CZ DE DK EE ES FI FR GB GR HU IE IT LI LU MC NL PT SE SI SK TR**

(30) Priorität: **25.02.2002 DE 10208705**

(43) Veröffentlichungstag der Anmeldung:
**24.11.2004 Patentblatt 2004/48**

(73) Patentinhaber: **Fraunhofer-Gesellschaft zur Förderung der angewandten Forschung e.V. 80686 München (DE)**

(72) Erfinder:
• **FEIGL, Torsten**
  **07743 Jena (DE)**
• **KAISER, Norbert**
  **07745 Jena (DE)**
• **KUHLMANN, Thomas**
  **07743 Jena (DE)**
• **YULIN, Sergey**
  **07749 Jena (DE)**

(74) Vertreter: **Pfenning, Meinig & Partner GbR Patent- und Rechtsanwälte Joachimstaler Strasse 10-12 10719 Berlin (DE)**

(56) Entgegenhaltungen:
EP-A- 1 065 532    EP-A- 1 150 139
WO-A-02/095771

• **DAVID T. ATTWOOD: "Soft X-rays and extreme ultraviolet radiation" 2000 , THE PRESS SYNDICATE OF THE UNIVERSITY OF CAMBRIDGE , CAMBRIDGE, UK XP002238688 Seite 98 -Seite 103**
• **UNDERWOOD J H ET AL: "Layered synthetic microstructures as Bragg diffractors for X rays and extreme ultraviolet: theory and predicted performance" APPLIED OPTICS, 1 SEPT. 1981, USA, Bd. 20, Nr. 17, Seiten 3027-3034, XP002238687 ISSN: 0003-6935**
• **LIM Y.C. ET AL: 'Fabrication and characterization of EUV multilayer mirrors optimized for small spectral reflection bandwidth' APPLIED PHYSICS A Bd. A72, Nr. 1, 2001, Seiten 121 - 124**

**Beschreibung**

Die Erfindung betrifft einen Spiegel für den EUV-Spektralbereich, der eine Monochromatisierung der EUV-Strahlung gewährleistet.

Optiken im EUV-Spektralbereich, welcher sich von ca. 5 nm bis 40 nm erstreckt, basieren auf Multilayerspiegeln. Diese bestehen aus alternierenden Schichtsystemen zweier Materialien, die sich in ihren optischen Konstanten möglichst weit unterscheiden. Für einige Anwendungen von EUV-Strahlung, beispielsweise im Bereich der Materialforschung, der Röntgenastronomie oder der Entwicklung von Röntgenmikroskopen, ist eine Monochromatisierung der EUV-Strahlung erforderlich. Es ist hierfür erforderlich, die Halbwertsbreite der Reflexion von Multilayerspiegeln zu reduzieren.

Für diese Reduzierung der Halbwertsbreite sind in der Literatur zwei Ansätze bekannt:

Aus R. Benbalagh, J.M. Andre, R. Barchewitz, M.F. Ravet, A. Raynal, F. Delmotte, F. Nridou, G. Julie, A. Bosseboeuf, R. Laval, P. Troussel, Nucl. Inst. Meth. Phy. Res. A 458 (3) (2001), 650-655, ist bekannt, bei einem Multilayerspiegel der Materialkombination Molybdän/Silizium eine laterale Strukturierung durch reaktives Ionenätzen vorzunehmen und damit eine Verringerung der Halbwertsbreite der Reflexion des Multilayerspiegels um den Faktor 3 gegenüber der vollen Halbwertsbreite der Reflexion eines für maximale Reflektivität optimierten Molybdän/Silizium-Multilayerspiegels zu erreichen.

Dieses Verfahren weist jedoch die Nachteile auf, daß die lithographische Strukturierung des Multilayers sehr aufwendig ist und ferner, daß bei einem solchen Multilayerspiegel eine erhebliche Verringerung der Reflektivität auf R=2% bei einem Einfallswinkel von ca. 45° zu beobachten ist - im Vergleich dazu weist ein entsprechender, nicht derart lithographisch strukturierter Multilayerspiegel bei gleichem Einfallswinkel eine Reflektivität von R=40% auf.

Aus Y.C. Lim, T. Westerwalbesloh, A. Aschentrup, O. Wehmeyer, G. Haindl, U. Kleineberg, U. Heinzmann, Appl. Phys. A72(2001), 121-124, ist bekannt, eine Reduzierung der Halbwertsbreite der Reflexion von Molybdän/Silizium-Multilayerspiegeln durch eine Verringerung der Schichtdicke der Molybdän-Teilschichten zu erreichen. In der Praxis zeigt sich allerdings, daß eine Verringerung der Molybdän-Schichtdicke nur begrenzt möglich ist, da diese bereits für einen Standard-Multilayerspiegel nur ca. 3 nm beträgt.

Aufgabe der vorliegenden Erfindung ist es, einen Multilayerspiegel anzugeben, welcher eine geringe Halbwertsbreite seiner Reflexion im EUV-Spektralbereich aufweist und in einem weiten Bereich von Einfallswinkeln eine hohe Reflektivität aufweist. Es sollen ferner die Begrenzungen und Nachteile des genannten Standes der Technik vermieden werden.

Diese Aufgabe wird erfindungsgemäß gelöst durch die kennzeichnenden Merkmale des Hauptanspruches in Verbindung mit dem Oberbegriff.

Dadurch, daß die Schichtanordnung eine periodische Abfolge von je zwei eine Periode mit der Periodendikke d bildenden Einzelschichten A und B unterschiedlicher Materialien mit der jeweiligen Schichtdicke $d_A$ und $d_B$ aufweist, so daß gilt:

$$0{,}97 \ (d_A + d_B) \leq d \leq (d_A + d_B) \ 1{,}03$$

mit

$$(n_A d_A + n_B d_B) * \cos(\theta) = m * \lambda/2,$$

wobei $n_A$ und $n_B$ die Realteile der komplexen Brechungsindizes der Materialien der Einzelschichten A und B sind, m eine die Ordnung der Bragg-Reflexion repräsentierende Ganzzahl größer oder gleich 2 sowie $\lambda$ die Wellenlänge der einfallenden Strahlung und $\theta$ der Einfallswinkel der einfallenden Strahlung ist, wird eine deutliche Reduktion der Halbwertsbreite der Reflexion des erfindungsgemäßen Spiegels erreicht, indem dieser so entstandene Multilayerspiegel in der 2. oder höheren Ordnung der Bragg-Reflexion verwendet wird. Durch diese auf der Bragg-Reflexion höherer Ordnung basierende Reduktion der Halbwertsbreite wirkt der Multilayerspiegel als Monochromator - wodurch sich der Aufbau von Optiken im EUV-Spektralbereich, z.B. an Synchrotronstrahlungsquellen und in EUV-Spektrometern an Plasmaquellen, bei denen zur Monochromatisierung von EUV-Strahlung üblicherweise verschiedene Arten von Gittern verwendet werden, wesentlich vereinfacht, da sich der Multilayerspiegel gleichzeitig als Monochromator und als strahlführendes Element verwenden läßt. Eine Verlängerung des Strahlenganges durch ein zusätzliches Gitter ist nicht mehr notwendig.

Durch die Berücksichtigung des Einfallswinkels $\theta$ wird der gewünschte Effekt dabei auch für den allgemeinen Fall des schrägen Welleneinfalls erzielt.

Wie aus der Bedingung des Hauptanspruches zu entnehmen ist, ist für die Erreichung der Reflektivität einer höheren Bragg-Ordnung eine Vervielfachung der Periodendicke erforderlich, was im Regelfall zu einer Verminderung der Reflektivität des Multilayerspiegels führt.

Diese Verminderung der Reflektivität bei Vervielfachung der Periodendicke wird erfindungsgemäß dadurch begrenzt, daß bei vorgenannter Vervielfachung nur die Dicke der Einzelschicht B (Spacer-Schicht) erhöht wird, während die Dicke der Einzelschicht A (Absorber-Schicht) im Vergleich zu einem entsprechenden Multilayerspiegel, welcher eine Bragg-Reflexion erster Ordnung verwendet, gleich bleibt, also dadurch, daß das Schichtdickenverhältnis $\Gamma = d_A/d$ stets kleiner ist als $0,8/m$, wobei $m$ eine die Ordnung der Bragg-Reflexion repräsentierende Ganzzahl größer oder gleich 2 ist.

In einer vorteilhaften Weiterbildung nach Anspruch 2 können noch bessere Ergebnisse erzielt werden, wenn für das Schichtdickenverhältnis $\Gamma$ gilt, daß es stets kleiner ist als $0,5/m$.

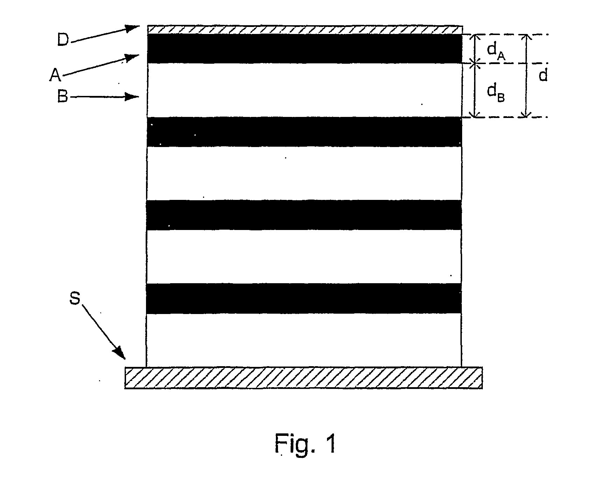

Ein Ausführungsbeispiel der Erfindung ist in der nachfolgenden Figur 1 dargestellt; die Erfindung wird anhand dieser Figur anschaulich erläutert. Es zeigen:

Figur 1    einen schematischen Querschnitt durch einen Monochromator-Multilayerspiegel;
Figur 2    ein Diagramm mit experimentell gemessenen Reflexionswerten.

In Figur 1 ist beispielhaft schematisch der Schichtaufbau eines Multilayer-Monochromatorspiegels für den EUV-Spektralbereich dargestellt. Unter einer Deckschicht D, die beispielsweise aus Silizium besteht, befinden sich in periodischer Folge Einzelschichten A und B, welche jeweils zusammen eine Periode bilden und wobei die jeweils schwarz dargestellte Schicht A, die Absorberschicht mit der Dicke $d_A$ und die jeweils weiß dargestellte Schicht B die Spacer-Schicht mit der Dicke $d_B$ darstellt. Es ergibt sich die Periodendicke d aus der Summe der Schichtdicken $d_A$ und $d_B$.

In der Zeichnung sind schematisch vier solcher Perioden aus den Schichten A und B bestehend dargestellt, wobei die unterste Schicht mit dem Substrat S eine Grenzfläche bildet. Die Schichtdicken $d_A$ und $d_B$ sind jeweils in allen Perioden gleich, so daß die jeweilige Periodendicke d insgesamt eine Größenabweichung von höchstens $\pm$ 1% aufweist und somit diese etwaige fertigungsbedingte Größenabweichung dennoch die Funktionsfähigkeit der Erfindung gewährleistet.

In praktischer Ausführung besteht die Absorberschicht A etwa aus Molybdän und die Spacer-Schicht B beispielsweise aus Silizium. Das Substrat S ist hier als Silizium-Waver ausgebildet. Die Anzahl der aus den Schichten A und B bestehenden Perioden ist beispielsweise 40, so daß die Eindringtiefe der Strahlung maximal ausgenutzt wird.

Der in Figur 1 schematisch dargestellte Multilayer-Monochromatorspiegel verwendet die zweite oder eine höhere Ordnung der Bragg-Reflexion. Die Schichtdicke d jeder der Perioden ist hier der Idealwert $d = d_A + d_B$ mit $n_A d_A + n_B d_B = m^* \lambda/2$, wobei die komplexen Brechungsindizes der Materialien der Einzelschichten A und B gegeben seien durch $\tilde{n}_A = n_A + i k_A$ und $\tilde{n}_B = n_B + i k_B$, so daß sich $n_A$ und $n_B$ direkt aus den Realteilen der komplexen Brechungsindizes ergeben, und wobei ferner $m$ eine die Ordnung der Bragg-Reflexion repräsentierende ganze Zahl größer oder gleich 2 ist und $\lambda$ die Wellenlänge der einfallenden Strahlung, die durch den Monochromator-Spiegel möglichst ungedämpft reflektiert werden soll.

Um gegenüber einem gewöhnlichen Multilayerspiegel mit einer Reflexion der ersten Bragg-Ordnung die Periodendicke zu vervielfachen, so daß die Reflexion der zweiten oder höheren Bragg-Ordnung erreicht wird und die damit einhergehende Reduzierung der Halbwertsbreite, so wie es in dem vorstehenden Formelausdruck formuliert wurde, dabei jedoch die Reflekivität des Spiegels im Reflexionsmaximum möglichst weitgehend zu erhalten, wird zur Vervielfachung der Periodendicke nur die Dicke der Spacerschicht B erhöht, während die Dicke der Absorberschicht A im Vergleich zum vorgenannten Multilayerspiegel erster Ordnung nicht verändert wird. Es wird also in jeder Periode das Schichtdickenverhältnis $\Gamma = d_A/d$ so gewählt, daß

$$\Gamma < 0,8/m$$

erfüllt ist. Noch bessere Ergebnisse können erzielt werden durch die Wahl von $\Gamma < 0,5/m$.

Da das Spacer-Material bei einem Multilayerspiegel so gewählt wird, es nur eine sehr geringe Absorption aufweist, reduziert sich auf diese Weise die Reflektivität bei weitem nicht so stark, als wenn beide Schichtdicken im gleichen Verhältnis erhöht würden, um die Reflexion in einer höheren Ordnung gegenüber einem Multilayerspiegel erster Ordnung zu erreichen.

Bei einer Simulation, der ein solcher Multilayer-Monochromatorspiegel mit Molybdän als AbsorberSchicht und Silizium als Spacer-Schicht mit 50 Perioden und einer gewählten Wellenlänge von 13,5 nm zugrunde gelegt wurde und bei der Rauhigkeit und Interdiffusionsschichten an den Molybdän/Silizium-Grenzflächen vernachlässigt wurden, ergeben sich die mit der beschriebenen Anordnung theoretisch erreichbare Maximal-Reflektivität und die volle Halbwertsbreite der Peaks (FWHM - Full Width At Half Maximum) über die verschiedenen Bragg-Ordnungen $m$ und die daraus folgenden Schichtdicken der Spacer-Schichten B wie in Tabelle 1. Schon in der zweiten Bragg-Ordnung läßt sich eine Reduzierung der Halbwertsbreite um etwa einen Faktor 2 erzielen. Selbst in der zehnten Bragg-Ordnung ist noch eine Reflektivität von mehr als 25% erreichbar.

Tabelle 1:

| M | $d_{Si}$ (nm) | $d_{Mo}$ (nm) | Periode d (nm) | $\Gamma$ | $R_{max}$ (%@13,5nm) | FWHM (nm) |
|---|------|------|------|------|------|------|
| 1 | 3,92 | 3,00 | 6,92 | 0,43 | 75,6 | 0,631 |
| 2 | 10,7 | 3,00 | 13,7 | 0,22 | 65,7 | 0,327 |
| 3 | 17,5 | 3,00 | 20,5 | 0,17 | 57,4 | 0,220 |
| 5 | 31,0 | 3,00 | 34,0 | 0,096 | 44,4 | 0,137 |
| 10 | 64,8 | 3,00 | 67,8 | 0,046 | 25,2 | 0,080 |

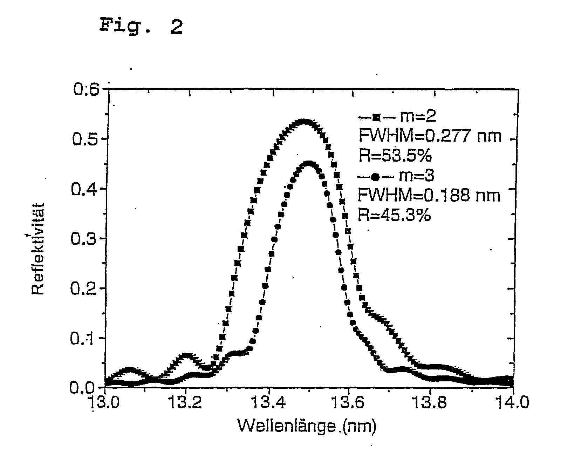

In einer praktischen Realisierung eines solchen Multilayer-Monochromatorspiegels für die Reflexionen in der zweiten bzw. dritten Bragg-Ordnung und mit einem Schichtdesign, wie es den in Tabelle 1 für m=2 und m=3 angegebenen Werten entspricht, konnten die im Diagramm in Figur 2 dargestellten Reflektivitätswerte dieser Schicht-Systeme im EUV-Bereich in Abhängigkeit von der Wellenlänge gemessen werden. Es ist deutlich zu erkennen, wie um die gewählte Wellenlänge $\lambda$ von 13,5 nm ein enges Maximum an Reflektivität erreicht wird und damit die gewünschte Monochromatisierung um die gewünschte Wellenlänge $\lambda$.

Die volle Halbwertsbreite der Reflektivität beträgt hier 0,277 nm für die Bragg-Ordnung m=2 bei einer maximalen Reflektivität von R=53,5% und 0,188 nm für m=3 bei einer maximalen Reflektivität von R=45,3%. Gegenüber einem herkömmlichen Multilayerspiegel mit einer Bragg-Reflexion der ersten Ordnung, wurde die Halbwertsbreite also auf weniger als die Hälfte, bzw. auf weniger als ein Drittel, reduziert.

**Patentansprüche**

1. Monochromatorspiegel für den EUV-Spektralbereich zur Reflexion einer Strahlung mit einer Wellenlänge $\lambda$ von 13,5 nm und einem seukrechten Einfallswinkel $\theta$ mit einer auf ein Substrat aufgebrachten Schichtanordnung, die eine Abfolge von Einzelschichten aufweist, **dadurch gekennzeichnet, dass** die Schichtanordnung eine periodische Abfolge von zwei eine Periode mit der Periodendicke d bildenden Einzelschichten A und B unterschiedlicher Materialien mit der jeweiligen Schichtdicke $d_A$ und $d_B$ aufweist, so dass gilt:

$$0,97 \ (d_A + d_B) \leq d \leq (d_A + d_B) \ 1,03$$

mit

$$(n_A d_A + n_B d_B) * \cos(\theta) = m * \lambda/2,$$

wobei $n_A$ und $n_B$ die Realteile der komplexen Brechungsindizes der Materialien der Einzelschichten A und B sind, m eine die Ordnung der Bragg-Reflexion repräsentierende Ganzzahl größer oder gleich 2, und wobei ferner für das Schichtdickenverhältnis $\Gamma = d_A/d$ gilt:

$$\Gamma < 0,5 \ / \ m.$$

2. Monochromatorspiegel nach Anspruch 1, **dadurch gekennzeichnet, dass** die Materialien der Einzelschichten A und B Molybdän und Silizium sind.

4

3. Monochromatorspiegel nach einem der Ansprüche 1 bis 2, **dadurch gekennzeichnet, dass** auf der Oberfläche der entfernt zum Substrat liegenden Schicht eine Deckschicht angeordnet ist.

4. Verfahren zum Designen eines Spiegels zum Monochromatisieren einer EUV-Strahlung einer vorgegebenen Wellenlänge λ unter einem vorgegebenen Einfallswinkel θ, wobei eine auf ein Substrat aufgebrachte Schichtanordnung mit einer periodischen Abfolge von zwei eine Periode mit der Periodendicke d bildenden Einzelschichten A und B unterschiedlicher Materialien mit der jeweiligen Schichtdicke $d_A$ und $d_B$ vorgesehen wird und wobei das Schichtdickenverhältnis $\Gamma = d_A/d$ vorgegeben wird zu

$$\Gamma < 0,5 \ / \ m$$

und

$$0,97 \ (d_A + d_B) \leq d \leq (d_A + d_B) \ 1,03$$

und

$$(n_A d_A + n_B d_B) \ \cos(\theta) = m \cdot \lambda/2$$

erfüllt wird, wobei $n_A$ und $n_B$ die Realteile der komplexen Brechungsindizes der Materialien der Einzelschichten A und B sind und m eine die Ordnung der Bragg-Reflexion repräsentierende Ganzzahl größer oder gleich 2 ist und wobei die Schichtdicke $d_A$ im Vergleich zu der Schichtdicke $d_A$ für m=1 bei dem vorgegebenen Einfallswinkel und der vorgegebenen Wellenlänge nicht verändert wird.

5. Verfahren nach Anspruch 4, wobei als Materialien der Einzelschichten A und B Molybdän und Silizium gewählt werden.

**Claims**

1. Monochromator mirror for the EUV spectral range for reflection of a radiation with a predetermined wavelength λ of 13,5 nm and with a vertical angle of incidence θ, the monochromator mirror having a layer arrangement applied to a substrate and which has a sequence of individual layers, **characterized in that** the layer arrangement has a periodic sequence of two individual layers A and B of different materials forming one period thickness d and having the particular layer thickness $d_A$ and $d_B$, so that the following applies:

$$0,97 \ (d_A + d_B) \leq d \leq (d_A + d_B) \ 1,03$$

where

$$(n_A d_A + n_B d_B) * \cos(\theta) = m * \lambda/2$$

wherein $n_A$ and $n_B$ are the real parts of the complex refractive indices of the materials of the individual layers A and B, m is a whole number representing the order of Bragg reflection grater than or equal to 2 and λ is the wavelength of the incident radiation and θ is the angle of incidence of the incident radiation, and wherein also the following applies for the layer thickness ratio $\Gamma = d_A/d$:

$$\Gamma < 0,5 \text{ m}.$$

**2.** Monochromator mirror according to claim 1, **characterized in that** the materials of the individual layers A and B are molybdenum and silicon.

**3.** Monochromator mirror according to one of claims 1 to 2, **characterized in that** a cover layer is provided on the surface of the layer lying remote from the substrate.

**4.** Method for designing of a mirror for monochromatizing of a EUV-radiation with a predetermined wavelength $\lambda$ and with a predetermined angle of incidence $\theta$, wherein a layer arrangement applied to a substrate is provided, which layer arrangement has a periodic sequence of two individual layers A and B of different materials forming one period with the period thickness d and having the particular layer thickness $d_A$ and $d_B$, and whereas the relation of the layer thickness

$$\Gamma = dA/d$$

is given to

$$\Gamma < 0,5 / \text{m}$$

and

$$0,97 \ (d_A + d_B) \leq d \leq (d_A + d_B) 1,03$$

where

$$(n_A d_A + n_B d_B) \cos(\theta) = m\lambda/2$$

is fulfilled, wherein $n_A$ and $n_B$ are the real parts of the complex refractive indices of the materials of the individual layers A and B, m is a whole number representing the order of Bragg reflection grater than or equal to 2 and wherein the layer thickness $d_A$ is not changed in comparison to the layer thickness $d_A$ for m=1 with the predetermined angle of incidence and the predetermined wavelenth.

**5.** Method according to claim 4, wherein as materials of the individual layers A and B are chosen molybdenum and silicon.

**Revendications**

**1.** Miroir monochromateur pour le domaine spectral de l'ultraviolet extrême, pour la réflexion d'un rayonnement présentant une longueur d'onde $\lambda$ de 13,5 nm et un angle d'incidence vertical $\theta$, comportant un agencement de couches qui est appliqué sur un substrat et qui comprend une séquence de couches individuelles, **caractérisé en ce que** l'agencement de couches présente une séquence périodique de deux couches individuelles A et B formant une période d'une épaisseur de période d, constituées de matériaux différents et présentant chacune une épaisseur de couche $d_A$ et $d_B$, de sorte que s'applique la formule

$$0,97 \ (d_A + d_B) \leq d \leq (d_A + d_B) \ 1,03$$

où

$$(n_A d_A + n_B d_B) * \cos(\theta) = m * \lambda/2,$$

sachant que $n_A$ et $n_B$ sont les parties réelles des indices de réfraction complexes des matériaux des couches individuelles A et B, m est un nombre entier supérieur ou égal à 2 représentant l'ordre de réflexion de Bragg, et dans lequel s'applique en outre, pour le rapport d'épaisseur de couche $\Gamma = d_A/d$, la formule :

$$\Gamma < 0{,}5 \, / \, m.$$

2. Miroir monochromateur selon la revendication 1, **caractérisé en ce que** les matériaux des couches individuelles A et B sont du molybdène et du silicium.

3. Miroir monochromateur selon une des revendications 1 à 2, **caractérisé en ce qu'**une couche de protection est disposée sur la surface de la couche se trouvant à distance du substrat.

4. Procédé pour la conception d'un miroir destiné à la monochromatisation d'un rayonnement ultraviolet extrême d'une longueur d'onde prescrite $\lambda$ selon un angle d'incidence prescrit $\theta$, dans lequel est prévu un agencement de couches qui est appliqué sur un substrat et qui comprend une séquence périodique de deux couches individuelles A et B formant une période d'une épaisseur de période d, constituées de matériaux différents et présentant chacune une épaisseur de couche $d_A$ et $d_B$, et dans lequel le rapport d'épaisseur de couche $\Gamma = d_A/d$ est prescrit selon la formule :

$$\Gamma < 0{,}5 \, / \, m$$

et
la relation

$$0{,}97 \, (d_A + d_B) \le d \le (d_A + d_B) \, 1{,}03$$

et

$$(n_A d_A + n_B d_B) * \cos(\theta) = m * \lambda/2$$

est remplie, sachant que $n_A$ et $n_B$ sont les parties réelles des indices de réfraction complexes des matériaux des couches individuelles A et B, et m est un nombre entier supérieur ou égal à 2 représentant l'ordre de réflexion de Bragg, et dans lequel l'épaisseur de couche $d_A$ n'est pas modifiée par rapport à l'épaisseur de couche $d_A$ pour m = 1 selon l'angle d'incidence prescrit et à la longueur d'onde prescrite.

5. Procédé selon la revendication 4, dans lequel on choisit comme matériaux des couches individuelles A et B du molybdène et du silicium.

Fig. 1

Fig. 2